# EUROPÄISCHE PATENTANMELDUNG

(11) **EP 4 764 257 A1**
(43) Veröffentlichungstag der Anmeldung: **24.06.2026**
(21) Anmeldenummer: 25216813.3
(22) Anmeldetag: 19.11.2025
(51) Int. Cl.: F16H 57/04, F03D 15/10, F16H 57/08

(54) **PLANETENTRÄGER MIT SCHMIERSTOFFLEITUNGEN FÜR AXIALGLEITLAGERSEGMENTE**

(30) Priorität: 20.12.2024 DE 102024212231
(71) Anmelder: ZF Friedrichshafen AG, 88046 Friedrichshafen (DE); ZF Wind Power Antwerpen NV, 3920 Lommel (BE)
(72) Erfinder: Goovaerts, Michel, 2235 Hulshout (BE)
(74) Vertreter: ZF Friedrichshafen AG

(57) **Zusammenfassung**

Die Erfindung betrifft eine Antriebsanordnung für eine Windkraftanlage; mit einem Planetenträger (101) und einem Planetenrad (107), das drehbar in dem Planetenträger (101) gelagert ist. Der Planetenträger (101) weist mindestens eine Schmierstoffleitung (113a, 113c, 201) auf, die in einen Zwischenraum zwischen dem Planetenrad (107) und einer Wange (103) des Planetenträgers (101) mündet.

## Beschreibung

Die Erfindung betrifft eine Antriebsanordnung nach dem Oberbegriff von Anspruch 1.

Aus dem Stand der Technik sind Planetengetriebe mit radial- und axialgleitgelagerten Planetenträgern bekannt. Beispielsweise offenbart US 2012 108 380 A2 ein solches Getriebe. Ein Radialgleitlager eines Planetenrads wird dabei über Bohrungen in einem Planetenbolzen, die schmierstoffleitend mit Bohrungen in dem Planetenträger verbunden sind, mit Schmierstoff versorgt. Über das Radialgleitlager tritt der Schmierstoff in die Axialgleitlager über.

Bei einer Schrägverzahnung führen die Zahneingriffskräfte zu einer Schiefstellung des Planetenrads. Dies ist insbesondere bei Axialgleitlagern problematisch, die aus mehreren Segmenten bestehen. In den Segmenten, die durch die Schiefstellung am meisten belastet sind, kann es zu Mischreibung und infolgedessen zu Beschädigungen und beschleunigtem Verschleiß kommen.

Der Erfindung liegt die Aufgabe zugrunde, eine gegenüber dem Stand der Technik verbesserte Antriebsanordnung für eine Windkraftanlage verfügbar zu machen. Diese Aufgabe wird gelöst durch eine Antriebsanordnung nach Anspruch 1. Bevorzugte Weiterbildungen sind in den Unteransprüchen enthalten und ergeben sich aus nachfolgender Beschreibung sowie den in den Figuren dargestellten Ausführungsbeispielen.

Die erfindungsgemäße Antriebsanordnung umfasst einen Planetenträger und mindestens ein Planetenrad. Der Planetenträger kann drehbar gelagert sein. Insbesondere kann der Planetenträger drehbar in einem Getriebegehäuse und/oder in einer gehäusefesten Struktur gelagert sein.

Das mindestens eine Planetenrad wiederum ist drehbar in dem Planetenträger gelagert. Insbesondere ist das Planetenrad relativ zu dem Planetenträger drehbar. Zur Lagerung des Planetenrads kann ein Planetenbolzen vorgesehen sein, der in einer Wange des Planetenträgers und gegebenenfalls in einer weiteren Wange fixiert ist.

In dem Fall erfolgt die Lagerung des Planetenrads in dem Planetenträger durch Lagerung des Planetenrads auf dem Planetenbolzen. Insbesondere können auf dem Planetenbolzen ein oder mehrere, beispielsweise als Gleitlager ausgestaltete Radiallager für das Planetenrad angebracht sein. Mit Wange wird ein Abschnitt des Planetenträgers bezeichnet, der sich im Wesentlichen in radialer Richtung erstreckt und Planetenbolzen ausbildet oder Aufnahmen zur Fixierung der Bolzen aufweist.

Erfindungsgemäß weist der Planetenträger mindestens eine Schmierstoffleitung auf, die in einen Zwischenraum zwischen dem Planetenrad und der Wange mündet.

Der Zwischenraum ist ein freier Raum, das heißt ein Raum, in dem keine Bauteile der Windkraftanlage oder der Antriebsanordnung enthalten sind. Der Zwischenraum ist vollständig mit Luft und/oder Schmierstoff gefüllt. Er wird in axialer Richtung durch das Planetenrad beziehungsweise eine Stirnfläche des Planetenrads und die Wange begrenzt.

Die mindestens eine Schmierstoffleitung mündet in den Zwischenraum. Dies bedeutet, dass sich eine Mündung der Schmierstoffleitung in dem Zwischenraum befindet oder direkt an den Zwischenraum angrenzt. Von der mindestens einen Schmierstoffleitung geförderter Schmierstoff gelangt daher über die Mündung direkt in den Zwischenraum. Dadurch lässt sich die Schmierstoffversorgung eines Axiallagers, mit dem das Planetenrad drehbar in dem Planetenträger gelagert ist, verbessern.

Die mindestens eine Schmierstoffleitung lässt sich vorteilhaft mittels mindestens einer Durchgangsbohrung realisieren. In einer entsprechenden bevorzugten Weiterbildung weist die Wange mindestens eine Durchgangsbohrung auf. Diese verläuft durch die Wange hindurch und weist entsprechend zwei Mündungen auf.

Die mindestens eine Durchgangsbohrung verläuft bevorzugt axial, das heißt parallel zu einer Mittel- und/oder Drehachse des Planetenträgers. Im Einzelnen ist dabei eine Mittelachse der mindestens einen Durchgangsbohrung parallel zu der Mittelund/oder Drehachse ausgerichtet.

Weiterbildungsgemäß mündet die mindestens eine Durchgangsbohrung in den Zwischenraum. Entsprechend liegt eine der beiden Mündungen in dem Zwischenraum oder grenzt direkt an den Zwischenraum an.

In einer alternativ bevorzugten Weiterbildung mündet die mindestens eine Durchgangsbohrung nicht direkt in den Zwischenraum, sondern über eine Düse, die in einer der Mündungen der Durchgangsbohrung angebracht ist. Dadurch lässt sich Schmierstoff, der von der mindestens einen Durchgangsbohrung geleitet wird, über die Düse in den Zwischenraum einbringen.

Die weiterbildungsgemäße Realisierung der mindestens einen Schmierstoffleitung durch mindestens eine Durchgangsbohrung ist im Hinblick auf die Fertigung vorteilhaft. So lässt sich eine Durchgangsbohrung besonders zeitsparend und kostengünstig in einem einzigen Fertigungsschritt in die Wange einbringen.

In Umfangsrichtung, das heißt entlang von Kreisbögen, deren Mittelpunkt auf der Mittel- und/oder Drehachse des Planetenträgers liegt, und die orthogonal zu der Mittelund/oder Drehachse ausgerichtet sind, erstreckt sich der Zwischenraum in einer bevorzugten Weiterbildung zwischen einem oder zwei Gleitlagersegmenten, die ein Axiallager für das Planetenrad bilden und in der Wange fixiert sind. In Umfangsrichtung wird der Zwischenraum weiterbildungsgemäß also von dem einen oder den zwei Gleitlagersegmenten begrenzt.

Im Falle eines Segments bildet das Gleitsegment allein, das heißt ohne weitere Gleitsegmente das Axiallager aus. In Umfangsrichtung ist es nicht in sich geschlossen, sondern unterbrochen und weist damit eine Lücke auf. In dieser Lücke erstreckt sich der genannte Zwischenraum.

Im Falle zweier Gleitlagersegmente sind diese voneinander beabstandet, sodass sich in Umfangsrichtung zwischen den beiden Gleitlagersegmenten zwei Lücken auftun. Diese Lücken bilden jeweils einen Zwischenraum der oben beschriebenen Art.

Durch die weiterbildungsgemäße Ausgestaltung des Axiallagers führt eine Drehung des Planetenrads dazu, dass Schmierstoff aus dem Zwischenraum in einen zwischen dem Planetenrad und dem jeweiligen Gleitlagersegment verlaufenden Lagerspalt gefördert wird. Dies wirkt einer Mangelschmierung besonders zuverlässig entgegen.

Bevorzugt ist die Antriebsanordnung mit einem Schmierstofftransferring weitergebildet. Dieser ist rotationssymmetrisch und koaxial zu dem Planetenträger angeordnet. Eine Symmetrieachse des Schmierstofftransferrings stimmt also mit der Mittelund/oder Drehachse des Planetenträgers überein.

Der Schmierstofftransferring ist an der Wange fixiert. Er ist ausgebildet, in eine gehäusefeste Nut einzugreifen. Die Nut kann durch das Getriebegehäuse oder eine gehäusefeste Struktur ausgebildet sein.

Wenn der Schmierstofftransferring in die Nut eingreift, bildet er zusammen mit der Nut einen Hohlraum aus. Der Hohlraum dient dazu, Schmierstoff zu leiten. Er ist schmierstoffleitend mit der mindestens einen Schmierstoffleitung verbunden. Beispielsweise kann der Schmierstofftransferring mindestens ein durchgehendes Loch aufweisen, dessen Mündung unmittelbar an eine Mündung der mindestens einen Schmierstoffleitung angrenzt.

Da die Nut gehäusefest ist, lässt sie sich mit starren Leitunten schmierstoffleitend mit einer gehäusefesten Pumpe verbinden. Auf die Weise kommt über den Hohlraum und die mindestens eine Schmierstoffleitung eine schmierstoffleitende Verbindung zwischen der Pumpe und dem oben genannten mindestens einen Zwischenraum zustande.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 eine schematische Ansicht eines Planetenträgers; und
Fig. 2 eine Schnittdarstellung des Planetenträgers.

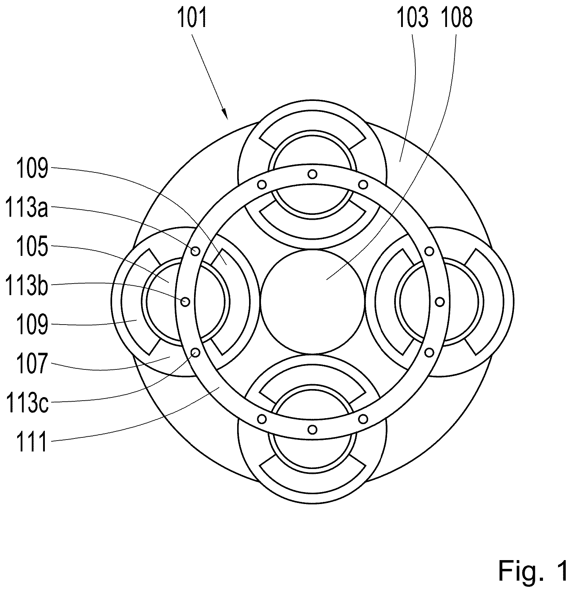

Der in Fig. 1 dargestellte Planetenträger 101 weist eine oder zwei Wangen 103 auf. In den Wangen 103 sind mehrere Planetenbolzen 105 kraft- und formschlüssig fixiert. Die Planetenbolzen 105 dienen der Lagerung jeweils eines Planetenrads 107. Die Planetenräder 107 kämmen mit einem Sonnenrad 108 und einem in Fig. 1 nicht dargestellten Hohlrad. Sind zwei Wangen 103 vorhanden, befinden sich die Planetenräder 107 zwischen den Wangen 103.

In den Wangen 103 stützen sich die Planetenräder 107 über jeweils ein Axiallager ab, das durch zwei kreisringsegmentförmige Gleitlagersegmente 109 gebildet wird. Die Gleitlagersegmente 109 sind in der jeweiligen Wange 103 fixiert und haben eine kreisringsegmentförmige Grundform. Die Grundform jedes Gleitlagersegments 109 entspricht also einem Segment eines Kreisrings.

Zur Schmierstoffversorgung ist ein Schmierstofftransferring 111 vorgesehen. Der Schmierstofftransferring 111 ist auf einer den Gleitlagersegmenten 109 gegenüberliegend axialen Seite der Wange 103 in der Wange fixiert. Um Schmierstoff von dem Schmierstofftransferring 111 in Richtung der Gleitlagersegmente 109 zu leiten, weist der Schmierstofftransferring 111 für jedes Planetenrad 109 drei durchgehende Bohrung - eine erste Bohrung 113a, eine zweite Bohrung 113b und eine dritte Bohrung 113c- auf. Die drei Bohrungen 113a, 113b, 113c münden jeweils in eine Durchgangsbohrung in der Wange 103. Die Wange 103 weist also eine erste Bohrung auf, in welche die erste Bohrung 113a des Schmierstofftransferrings 111 mündet, eine zweite Bohrung, in welche die zweite Bohrung 113b des Schmierstofftransferrings 111 mündet, und eine dritte Bohrung, in welche die dritte Bohrung 113c des Schmierstofftransferrings 111 mündet.

Die zweite Bohrung der Wange 103 ist über eine Schmierstoffleitung in dem Planetenbolzen 105 schmierstoffleitend mit einem Radialgleitlager des Planetenrads 107 verbunden. Die erste Bohrung und die zweite Bohrung der Wange 103 münden jeweils in einen von zwei sich zwischen den Gleitlagersegmenten 109 eines Planetenrads 107 erstreckenden Zwischenräumen. Schmierstoff, der auf die Weise in die Zwischenräume gelangt, dient der Schmierung der Gleitlagersegmente 109.

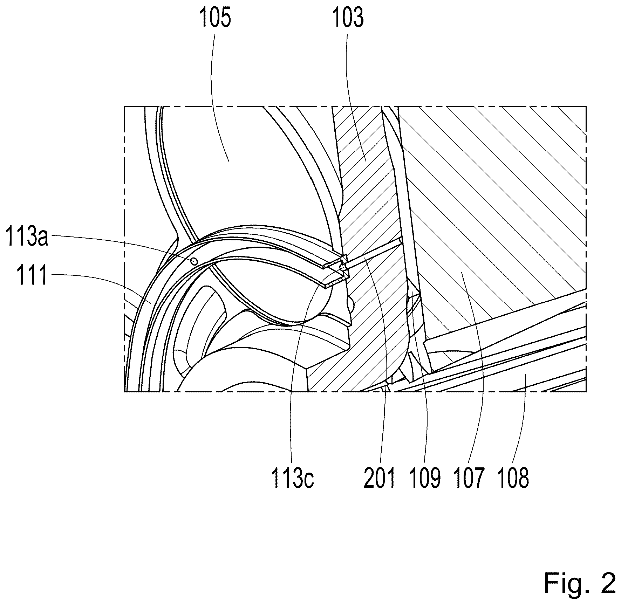

Die Schnittdarstellung von Fig. 2 zeigt zusätzlich den Verlauf der Bohrungen der Wange 103. Exemplarisch ist hier die dritte Bohrung 201 dargestellt. Die dritte Bohrung 201 ist wie auch die anderen Bohrungen in der Wange 103 als gerade, axial ausgerichtete Durchgangsbohrung ausgestaltet.

### Bezugszeichen

- 101: Planetenträger
- 103: Wange
- 105: Planetenbolzen
- 107: Planetenrad
- 108: Sonnenrad
- 109: Gleitlagersegment
- 111: Schmierstofftransferring
- 113a: Bohrung
- 113b: Bohrung
- 113c: Bohrung
- 201: Bohrung

## Patentansprüche

1. Antriebsanordnung für eine Windkraftanlage; mit einem Planetenträger (101) und mindestens einem Planetenrad (107), das drehbar in dem Planetenträger (101) gelagert ist; **dadurch gekennzeichnet, dass**
der Planetenträger (101) mindestens eine Schmierstoffleitung (113a, 113c, 201) aufweist, die in einen Zwischenraum zwischen dem Planetenrad (107) und einer Wange (103) des Planetenträgers (101) mündet.

2. Antriebsanorndung nach Anspruch 1; **dadurch gekennzeichnet, dass** die Wange (103) mindestens eine Durchgangsbohrung (201) aufweist, die in den Zwischenraum mündet.

3. Antriebsanorndung nach Anspruch 1; **dadurch gekennzeichnet, dass** die Wange (103) mindestens eine Durchgangsbohrung (201) mit einer Düse aufweist; wobei
die Düse in einer Mündung der Durchgangsbohrung (201) angebracht ist und in den Zwischenraum mündet.

4. Antriebsanorndung nach einem der vorhergehenden Ansprüche; **dadurch gekennzeichnet, dass**
der Zwischenraum in Umfangsrichtung von einem oder zwei in der Wange (103) fixierten Gleitlagersegmenten (109) begrenzt wird, die die ein Axiallager für das Planetenrad (107) bilden.

5. Antriebsanorndung nach einem der vorhergehenden Ansprüche; **gekennzeichnet durch**
einen rotationssymmetrischen Schmierstofftransferring (111), der koaxial zu dem Planetenträger (101) angeordnet und an der Wange (103) fixiert ist, und der ausgebildet ist, in eine gehäusefeste Nut einzugreifen und mit der Nut einen Hohlraum auszubilden; wobei
der Hohlraum schmierstoffleitend mit der mindestens einen Schmierstoffleitung (113a, 113c, 201) verbunden ist.
